(19) Europäisches Patentamt / European Patent Office / Office européen des brevets

(11) EP 2 796 916 B1

(12) **EUROPEAN PATENT SPECIFICATION**

(45) Date of publication and mention of the grant of the patent:
**27.02.2019 Bulletin 2019/09**

(21) Application number: **12860928.6**

(22) Date of filing: **27.09.2012**

(51) Int Cl.:
*G02B 21/36* (2006.01)          *G03B 37/00* (2006.01)
*G06T 1/00* (2006.01)           *H04N 5/225* (2006.01)
*H04N 5/232* (2006.01)          *H04N 5/243* (2006.01)
*G06T 5/00* (2006.01)           *H04N 5/357* (2011.01)
*H04N 5/217* (2011.01)          *G06T 5/50* (2006.01)

(86) International application number:
**PCT/JP2012/074957**

(87) International publication number:
**WO 2013/094273 (27.06.2013 Gazette 2013/26)**

(54) **IMAGE PROCESSING DEVICE, IMAGING DEVICE, MICROSCOPE SYSTEM, IMAGE PROCESSING METHOD, AND IMAGE PROCESSING PROGRAM**

BILDVERARBEITUNGSVORRICHTUNG, BILDGEBUNGSVORRICHTUNG, MIKROSKOPSYSTEM, BILDVERARBEITUNGSVERFAHREN UND BILDVERARBEITUNGSPROGRAMM

DISPOSITIF DE TRAITEMENT D'IMAGE, DISPOSITIF D'IMAGERIE, SYSTÈME DE MICROSCOPE, PROCÉDÉ DE TRAITEMENT D'IMAGE ET PROGRAMME DE TRAITEMENT D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2011 JP 2011282300**

(43) Date of publication of application:
**29.10.2014 Bulletin 2014/44**

(73) Proprietor: **Olympus Corporation**
**Tokyo 192-8507 (JP)**

(72) Inventor: **HORIE, Gen**
**Hachioji-shi,**
**Tokyo 192-8507 (JP)**

(74) Representative: **Gunzelmann, Rainer**
**Wuesthoff & Wuesthoff**
**Patentanwälte PartG mbB**
**Schweigerstraße 2**
**81541 München (DE)**

(56) References cited:
**EP-A2- 2 194 414          JP-A- 2001 177 738**
**JP-A- 2002 094 860        JP-A- 2002 290 829**
**US-A1- 2002 135 688**

- **D. TOMAZEVIC ET AL: "Comparative evaluation of retrospective shading correction methods", JOURNAL OF MICROSCOPY, vol. 208, no. 3, 1 December 2002 (2002-12-01), pages 212-223, XP055039617, ISSN: 0022-2720, DOI: 10.1046/j.1365-2818.2002.01079.x**
- **PENG TINGYING ET AL: "Shading Correction for Whole Slide Image Using Low Rank and Sparse Decomposition", 14 September 2014 (2014-09-14), ADVANCES IN COMMUNICATION NETWORKING : 20TH EUNICE/IFIP EG 6.2, 6.6 INTERNATIONAL WORKSHOP, RENNES, FRANCE, SEPTEMBER 1-5, 2014, REVISED SELECTED PAPERS; [LECTURE NOTES IN COMPUTER SCIENCE , ISSN 1611-3349], SPRINGER VERLAG, DE, PAGE(S) 33 - 40, XP047312303, ISSN: 0302-9743 * abstract ***

EP 2 796 916 B1

**Description**

Field

The present invention relates to an image processing apparatus, an imaging apparatus, a microscope system, an image processing method, and an image processing program, for performing image processing on a captured image of a subject.

Background

With optical devices, such as cameras and microscopes, normally, due to properties of image forming optical systems, such as lenses, a phenomenon that light quantities in peripheral areas are decreased as compared with centers of planes orthogonal to optical axes occurs. This phenomenon is called "shading" in general. Thus, conventionally, by performing image processing based on correction values, actually measured values, or the like, which are acquired empirically, on images that have been captured, degradation of the images has been suppressed. Such image processing is called "shading correction" (see, for example, Patent Literature 1 and Patent Literature 2).

Microscopes allow observation of subjects (specimens) at high magnification and high resolution, but on the other hand, have a problem that the higher a magnification is, the smaller a field of view observable at once becomes. Thus sometimes, a plurality of images are acquired by performing imaging while sliding the field of view with respect to a specimen and these images are connected to one another to thereby perform image processing of combining the images having their fields of view enlarged to a size corresponding to the whole specimen. A connected image that has been subjected to such a field-of-view enlargement process is called a virtual slide image, and a microscope system that is able to acquire a virtual slide image is called a virtual slide system or virtual microscope system (for example, see Patent Literature 3 and Patent Literature 4).

Citation List

Patent Literature

Patent Literature 1: Japanese Patent Application Laid-open No. 2009-159093
Patent Literature 2: Japanese Patent Application Laid-open No. 2004-272077
Patent Literature 3: Japanese Patent Application Laid-open No. 2008-191427
Patent Literature 4: Japanese Patent Application Laid-open No. 2011-141391 JP 2001 177738 A concerns an image composition method, that is used to compose a plurality of images photographed at different zoom magnifications, and that comprises a correction information generating step where shading correction information is generated under each different photographing condition, a read step where the photographing condition of each image is read from an imaging device photographing a plurality of the images, an information supply step where optimum correction information obtained from the shading correction information is supplied to each image on the basis of the photographing condition of each image, a correction step where shading correction is applied to each image on the basis of the received shading correction information, and a compositions step where one image is generated by composing a plurality of the images whose shading is corrected.

Summary

Technical Problem

However, in a connected image which connects a plurality of images, influence of shading that occurred in individual images appears regularly. Accordingly, the influence given by the shading on an image quality of the connected image is particularly large. Therefore, it is important to perform accurate shading correction on individual images.

In general, shading correction of a microscope image is performed by using a calibration image acquired by imaging a field in a state in which a subject is not arranged on a stage (see Patent Literature 1). However, even for the same microscopes, states of shading may change between the imaging of the calibration image and the imaging of the subject. Thus, it has been also proposed that instead of using a calibration image prepared beforehand, data for shading correction are generated from an image to be corrected in which a subject is photographed and these data for shading correction are used to perform shading correction on the image to be corrected (see Patent Literature 2).

However, in the image to be corrected, in addition to a luminance component deriving from shading, various components including a luminance component deriving from the subject are included and distinguishing between the luminance component deriving from shading and the other components is difficult. Therefore, if the data for shading correction generated from the image to be corrected are used, like the luminance component deriving from the subject, correction ends up being made on a component which should not be affected by the correction. As a result of such decrease in accuracy of the shading correction, there is a risk that an image quality is conversely reduced due to, for example, an artifact being generated in the corrected image.

The present invention has been made in view of the foregoing, and an object of the invention is to provide an image processing apparatus, an imaging apparatus, a microscope system, an image processing method, and an image processing program, that are able to perform highly accurate shading correction by using image data of an image to be corrected. Solution to Problem

To solve the above-mentioned problem and achieve the object, an image processing apparatus according to the invention includes the features of claim 1.

In the above-described image processing apparatus, the correction image generating unit further includes an image adjusting unit configured to perform positional adjustment of the arbitrary images and match the subjects in the common portion, and the difference acquiring unit acquires the difference in a state in which the positional adjustment has been performed by the image adjusting unit.

In the above-described image processing apparatus, the correction image generating unit further includes a shading estimation unit configured to estimate an influence of shading in an area in each image other than the common portion, based on the shading component.

In the above-described image processing apparatus, the plurality of images are images that are captured by parallel movement of an imaging field of view.

In the above-described image processing apparatus, the plurality of images are images that are captured by changing an imaging magnification.

In the above-described image processing apparatus, the plurality of images are images that are captured by rotating an imaging field of view.

An imaging apparatus according to the invention
includes: the above-described image processing apparatus; and an imaging unit configured to image the subjects.

A microscope system according to the invention includes: the above-described image processing apparatus; and a microscope apparatus. The microscope apparatus includes: a stage on which a specimen as the subjects is able to be placed; an optical system provided opposite to the stage; an image acquiring unit configured to acquire an image by imaging a field of view set on the specimen via the optical system; and a stage position changing unit configured to change the imaging field of view by moving at least one of the stage and optical system in a direction orthogonal to an optical axis of the optical system.

An image processing method according to the invention includes the features of claim 8.

An image processing program according to the invention causes a computer to execute the features of claim 9.

Advantageous Effects of Invention

According to the present invention, a difference in luminance of pixels from two arbitrary images among a plurality of images is acquired, the two arbitrary images having a common portion in which subjects thereof are common to one another, and a correction image used for correcting the plurality of images is generated based on a shading component detected based on the difference, and thus highly accurate shading correction can be performed.

Brief Description of Drawings

FIG. 1 is a schematic diagram illustrating an example of a configuration of a microscope system according to a first embodiment of the present invention;
FIG. 2 is a schematic diagram schematically illustrating a configuration of a microscope apparatus illustrated in FIG. 1;
FIG. 3 is a flow chart illustrating operations of the microscope system illustrated in FIG. 1;
FIG. 4 is a schematic diagram illustrating a method of capturing an image in the first embodiment;
FIG. 5 is a schematic diagram illustrating the method of capturing an image in the first embodiment;
FIG. 6 is a schematic diagram illustrating a plurality of images having a portion that is common to one another;
FIG. 7 is a schematic diagram illustrating the plurality of images that have been positionally adjusted;
FIG. 8 is a flow chart illustrating operations of a shading detection unit illustrated in FIG. 1;
FIG. 9 is a schematic diagram illustrating a method of capturing an image in a second embodiment of the present invention;

FIG. 10 is a schematic diagram illustrating pixels corresponding among the plurality of images;

FIG. 11 is a schematic diagram illustrating a method of capturing an image in a third embodiment of the present invention;

FIG. 12 is a schematic diagram illustrating a plurality of images having a portion that is common to one another;

FIG. 13 is a schematic diagram illustrating the plurality of images that have been positionally adjusted;

FIG. 14 is a block diagram illustrating an example of a configuration of a microscope system according to a fourth embodiment of the present invention;

FIG. 15 is a flow chart illustrating operations of the microscope system illustrated in FIG. 14; and

FIG. 16 is a schematic diagram illustrating a virtual slide image generated by a VS image generating unit illustrated in FIG. 14.

Description of Embodiments

Hereinafter, embodiments according to the present invention will be described in detail with reference to the drawings. The present invention is not limited by these embodiments. Further, in the description below, examples in which an image processing apparatus according to the present invention is applied to a microscope system are described, but the image processing apparatus according to the present invention may be applied to any of various devices having an imaging function, such as digital cameras.

(First Embodiment)

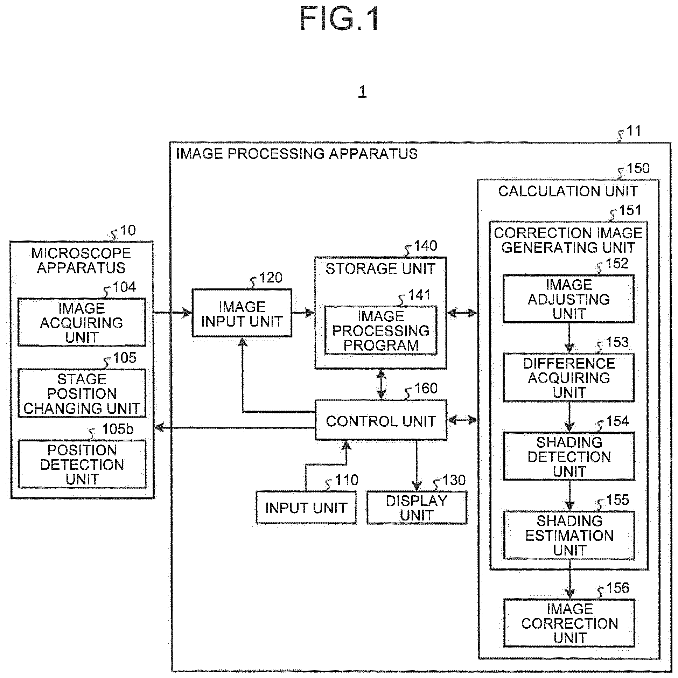

FIG. 1 is a block diagram illustrating a configuration of a microscope system according to a first embodiment of the present invention. As illustrated in FIG. 1, a microscope system 1 according to the first embodiment includes: a microscope apparatus 10; and an image processing apparatus 11 that controls operations of the microscope apparatus 10 and processes an image acquired by the microscope apparatus 10.

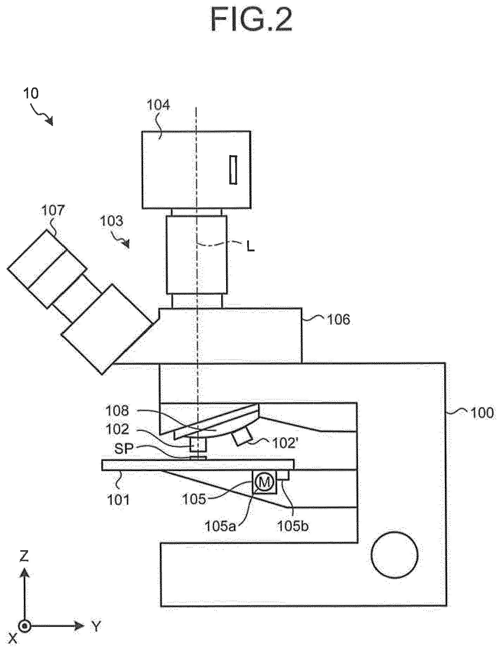

FIG. 2 is a schematic diagram schematically illustrating a configuration of the microscope apparatus 10. As illustrated in FIG. 2, the microscope apparatus 10 has: an arm 100 that is approximately C-shaped; a specimen stage 101 that is attached to the arm 100 and on which a specimen SP is placed; an objective lens 102 that is provided at an end side of a lens barrel 103 opposite to the specimen stage 101 via a trinocular lens barrel unit 106; an image acquiring unit 104 that is provided at another end side of the lens barrel 103; and a stage position changing unit 105 that moves the specimen stage 101. The trinocular lens barrel unit 106 branches observation light of the specimen incident from the objective lens 102 to the image acquiring unit 104 and a later described eyepiece unit 107. The eyepiece unit 107 is for a user to directly observe specimens. Hereinafter, an optical axis L direction of the objective lens 102 will be referred to as "Z-axis direction" and a plane orthogonal to this Z-axis direction will be referred to as "XY-plane". In FIG. 2, the microscope apparatus 10 is arranged such that a principal surface of the specimen stage 101 generally matches the XY-plane.

The objective lens 102 is attached to a revolver 108 that is able to hold a plurality of objective lenses (for example, objective lens 102') having magnifications different from one another. By rotating this revolver 108 and changing the objective lenses 102 and 102' opposite to the specimen stage 101, a magnification of an image captured by the image acquiring unit 104 is able to be changed.

Inside the lens barrel 103, a zoom unit is provided, which includes a plurality of zoom lenses and a driving unit (neither of which is illustrated) that changes positions of these zoom lenses. The zoom unit magnifies or reduces a subject within an imaging field of view by adjusting the position of each zoom lens. An encoder may be further provided in the driving unit in the lens barrel 103. In this case, an output value of the encodes may be output to the image processing apparatus 11 and at the image processing apparatus 11, from the output value of the encoder, a position of a zoom lens may be detected to automatically calculate a magnification of the imaging field of view.

The image acquiring unit 104, for example, includes an imaging element such as a CCD or a CMOS, and is a camera that is able to capture a color image having a pixel level (pixel value) in each of red (R), green (G), and blue (B) bands at each pixel that the imaging element has. The image acquiring unit 104 receives light (observation light) incident from the objective lens 102 via an optical system in the lens barrel 103, generates image data corresponding to the observation light, and outputs the image data to the image processing apparatus 11.

The stage position changing unit 105 includes a motor 105a, for example, and changes the imaging field of view by moving a position of the specimen stage 101 in the XY-plane. Further, the stage position changing unit 105 focuses the objective lens 102 on the specimen SP by moving the specimen stage 101 along a Z-axis.

Further, in the stage position changing unit 105, a position detection unit 105b is provided, which detects the position of the specimen stage 101 and outputs a detection signal to the image processing apparatus 11. The position detection unit 105b includes an encoder that detects a rotation amount of the motor 105a, for example. Or, the stage position changing unit 105 may include: a pulse generating unit that generates a pulse according to control of a control unit 160 (described later) of the image processing apparatus 11; and a stepping motor.

The image processing apparatus 11 includes: an input unit 110 that receives input of instructions and information for the image processing apparatus 11; an image input unit that is an interface, which receives input of the image output from the image acquiring unit 104; a display unit 130 that displays a microscope image and other information; a storage unit 140; a calculation unit that performs specified image processing on the image acquired by the microscope apparatus 10; and the control unit 160 that controls operations of each of these units.

The input unit 110 includes: an input device such as a key board, various buttons, or various switches; and a pointing device such as a mouse or a touch panel, and receives a signal input via these devices and inputs the signal into the control unit 160.

The display unit 130 includes a display device such as, for example, a liquid crystal display (LCD), an electroluminescence (EL) display, or a cathode ray tube display, and displays various screens according to control signals output from the control unit 160.

The storage unit 140 includes: a semiconductor memory, such as a rewritable flash memory, a RAM, or a ROM; or a recording medium, such as a hard disk, an MO, a CD-R, or a DVD-R, which is built-in or connected by a data communication terminal, and a reading device that reads information recorded in the recording medium. The storage unit 140 stores therein the image data output from the image acquiring unit 104 and various programs executed by a calculation unit 150 and the control unit 160 respectively and various setting information. Specifically, the storage unit 140 stores therein an image processing program 141 for performing shading correction on the image acquired by the image acquiring unit 104.

The calculation unit 150 includes hardware such as a CPU, for example, and executes, by reading the image processing program 141 stored in the storage unit 140, image processing of performing the shading correction on an image corresponding to the image data stored in the storage unit 140.

In more detail, the calculation unit 150 has: a correction image generating unit 151 that generates a correction image for performing the shading correction on an image; and an image correction unit 156 that corrects an image using the correction image. Of these, the correction image generating unit 151 includes: an image adjusting unit 152 that performs positional adjustment of images such that, among a plurality of images having at least a part of subjects thereof being common to one another, these common portions match one another; a difference acquiring unit 153 that acquires a difference in luminance of pixels corresponding among the plurality of images that have been positionally adjusted; a shading detection unit 154 that detects, based on the difference in luminance, a shading component generated in the images; and a shading estimation unit 155 that estimates, based on the shading component, an influence of shading in an area other than the common portion to generate the correction image.

The control unit 160 includes hardware, such as a CPU, for example, and by reading the various programs stored in the storage unit 140, performs, based on various data stored in the storage unit 140 and various information input from the input unit 110, transfer or the like of instructions and data to each unit of the image processing apparatus 11 and microscope apparatus 10 and comprehensively controls operations of the whole microscope system 1.

Next, principles of the shading correction in the first embodiment will be described.

In an image captured by the microscope apparatus 10, a luminance component (herein after, referred to as "subject component) T(x, y) corresponding to a subject and a luminance component corresponding to shading (hereinafter, referred to as "shading component") S(x, y) are included. Coordinates (x, y) represent positional coordinates of each pixel in the image. If a luminance of each pixel is I(x, y), the luminance I(x, y) is able to be expressed by Equation (1-1) below.

$$I(x, y) = T(x, y) \times S(x, y) \qquad (1\text{-}1)$$

Further, among a plurality of images captured by changing some of their imaging conditions, an influence by the shading component S(x, y) on the common subject component T(x, y) changes according to the positional coordinates in the images. Thus, from luminance of pixels having subject components T(x, y) common to one another among the plurality of images, by canceling the subject components T(x, y), the change in the shading component S(x, y) according to the positional coordinates in the images is able to be calculated. From this change in the shading component, a distribution of the shading components S(x, y) in the images can be extracted.

Further, as expressed by Equation (1-2) below, by removing the extracted shading component S(x, y) from the luminance I(x, y), an image having only the subject component T(x, y) is able to be acquired.

$$T(x, y) = I(x, y) / S(x, y) \qquad (1\text{-}2)$$

As a method of changing the imaging conditions, for example, a method of moving an imaging field of view parallel with respect to the specimen SP, changing a magnification, or rotating an imaging field of view with respect to the specimen is available. In the first embodiment, the imaging conditions are changes by the method of moving the imaging field of view parallel with respect to the specimen SP.

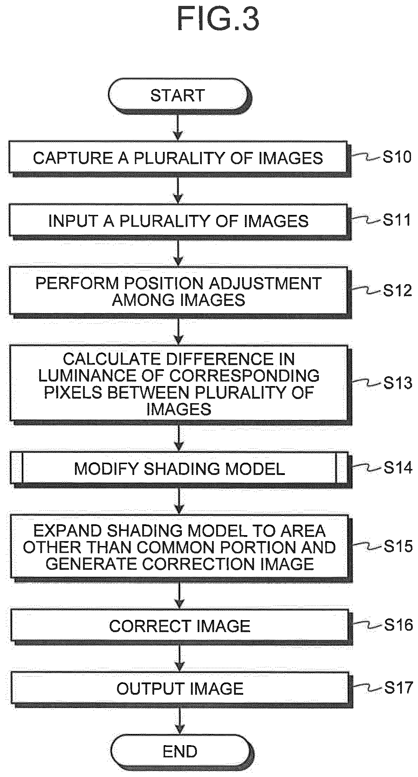

Next, operations of the microscope system 1 will described. FIG. 3 is a flow chart illustrating the operations of the microscope system 1.

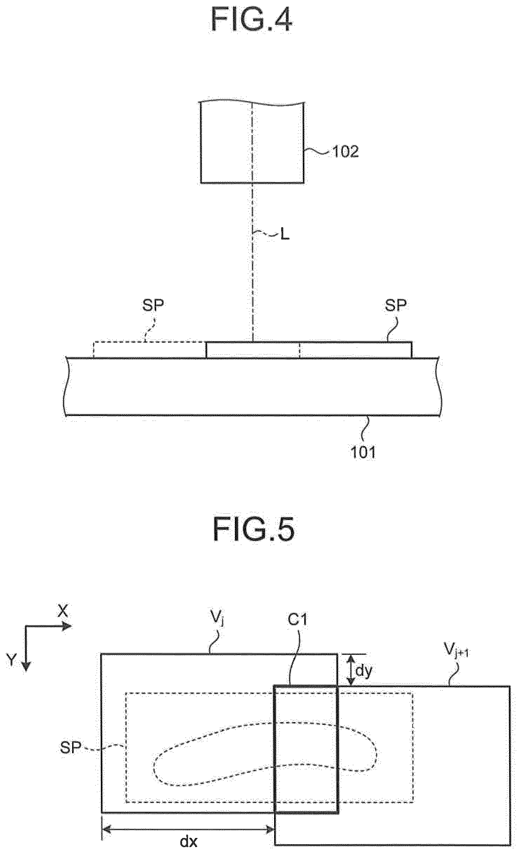

First, at step S10, the microscope apparatus 10 captures a plurality of images having a portion of an imaging field of view overlapping one another, while changing the imaging field of view with respect to the specimen SP, under the control of the control unit 160. In more detail, as illustrated in FIG. 4, the microscope apparatus 10 causes the image acquiring unit 104 to image the imaging field of view by parallel movement of the specimen stage 101 on which the specimen SP is placed.

When that is done, in the first embodiment, as illustrated in FIG. 5, the microscope apparatus 10 moves the specimen stage 101 every time the microscope apparatus 10 performs imaging, by a movement amount dx in an X-direction and a movement amount dy in a Y-direction, and performs the imaging such that partial areas C1 overlap each other between adjacent imaging field of view $V_j$ and $V_{j+1}$ ("j" being a number indicating a sequential order of the imaging, where j = 1, 2, ...). The imaging field of view may be moved in only one of the X-direction and Y-direction. The image acquiring unit 104 outputs image data acquired by performing such imaging to the image processing apparatus 11. The image processing apparatus 11 causes the storage unit 140 to store the image data output from the image acquiring unit 104 once.

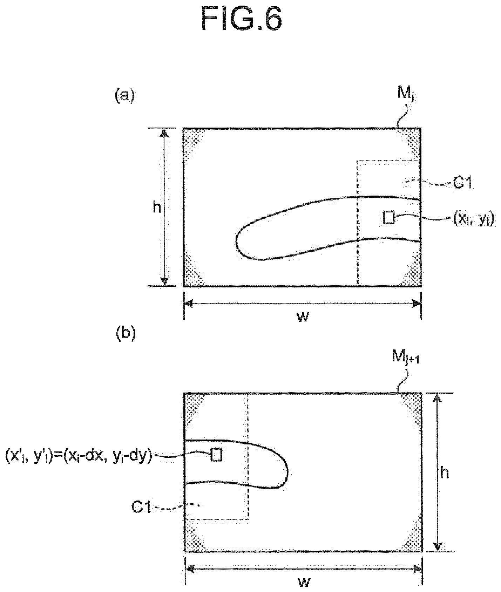

At step S11, the control unit 160 reads the image data from the storage unit 140 and inputs the plurality of images corresponding to the image data into the calculation unit 150. Specifically, as illustrated in FIG. 6 at (a) and (b), an image $M_j$ acquired by photographing the imaging field of view $V_j$ and an image $M_{j+1}$ acquired by photographing the imaging field of view $V_{j+1}$ are input to the calculation unit 150. Between the images $M_j$ and $M_{j+1}$, a pixel at coordinates $(x_i, y_i)$ in the image $M_j$ and a pixel at coordinates $(x'_i, y'_i)$ $(=(x_i - dx, y_i - dy))$ in the image $M_{j+1}$ are pixels corresponding to each other. These pixels corresponding to each other has the same subject photographed therein. Hereinafter, a size in a horizontal direction of the images $M_j$ and $M_{j+1}$ is assumed to be "w" and a size thereof in a vertical direction is assumed to be "h".

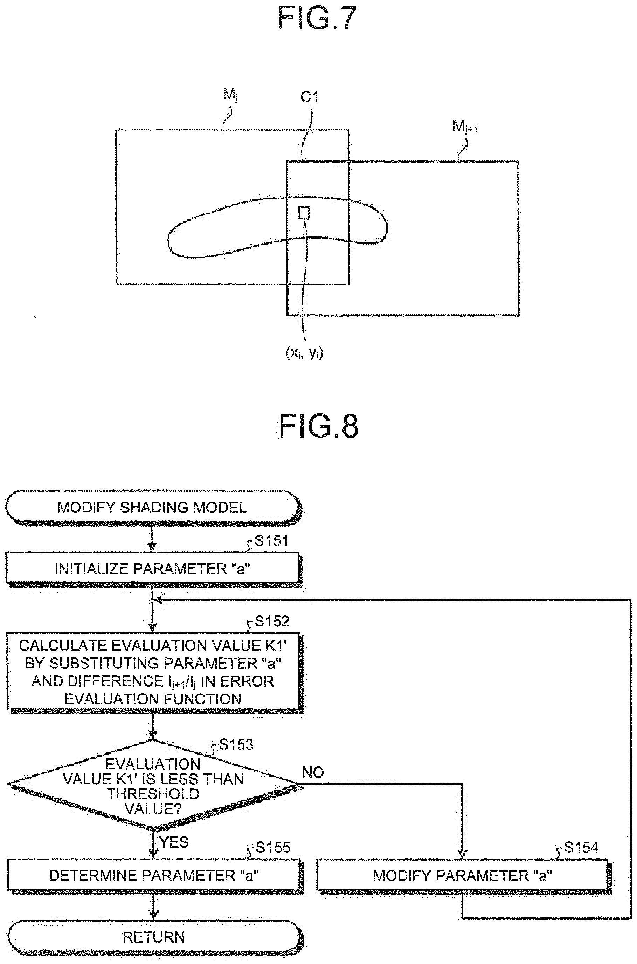

At subsequent step S12, the image adjusting unit 152 performs, based on an output value from the position detection unit 105b, positional adjustment of the images such that the common portions match one another among the plurality of images. For example, for the images $M_j$ and $M_{j+1}$, as illustrated in FIG. 7, by moving the image $M_{j+1}$ by the movement amounts dx and dy of the imaging field of view with respect to the image $M_j$, positional adjustment to overlap the areas C1 with each other is performed.

At step S13, the difference acquiring unit 153 calculates a luminance from a pixel value of a pixel included in the common portion of each image and calculates a difference in luminance of the pixels corresponding to one another among the plurality of images. For example, for the images $M_j$ and $M_{j+1}$, a difference between a luminance $I_j$ of the pixel at the coordinates $(x_i, y_i)$ in the image $M_j$ and a luminance $I_{j+1}$ of the pixel at the coordinates $(x'_i, y'_i)$ in the image $M_{j+1}$ is calculated.

Herein, the luminance $I_j$ and $I_{j+1}$ are given respectively by Equations (1-3) and (1-4) below.

$$I_j(x_i, y_i) = T(x_i, y_i) \times S(x_i, y_i) \qquad (1-3)$$

$$I_{j+1}(x'_i, y'_i) = T(x'_i, y'_i) \times S(x'_i, y'_i) \qquad (1-4)$$

Further, since subject components are equal to each other between corresponding pixels, Equation (1-5) below holds.

$$T(x_i, y_i) = T(x'_i, y'_i) \qquad (1-5)$$

Further, by using coordinates $(x'_i, y'i) = (x_i - dx, y_i - dy)$, Equation (1-4) is rewritable into Equation (1-6) below.

$$I_{j+1}(x'_i, y'_i) = T(x_i, y_i) \times S(x_i - dx, y_i - dy)$$

$$(1-6)$$

From Equation (1-3) and (1-6), a relation expressed by Equation (1-7) below holds.

$$I_{j+1}(x'_i, y'_i)/I_j(x_i, y_i) = S(x_i - dx, y_i - dy)/S(x_i, y_i) \tag{1-7}$$

That is, a difference $I_{j+1}(x'_i, y'_i)/I_j(x_i, y_i)$ in luminance corresponds to the change in the shading component.

At step S13, such a difference $I_{j+1}(x'_i, y'_i) / I_j(x_i, y_i)$ is calculated with respect to all sets of coordinates within the area C1 which is the common portion.

At step S14, the shading detection unit 154 generates a shading model that approximates the influence of the shading in the images $M_j$ and $M_{j+1}$, and based on the difference $I_{j+1}(x'_i, y'_i) / I_j(x_i, y_i)$ at each set of coordinates $(x_i, y_i)$ within the area C1, modifies the shading model.

The influence of the shading occurring in each image is supposed to follow Equation (1-7) in principle, but in fact, the luminance differs from each other subtly even between corresponding pixels or there is variation in the shading, and thus Equation (1-7) does not hold for all of the sets of coordinates in the area C1. Accordingly, a model representing a shading component S is set, and the shading component S for which an evaluation value K1 becomes minimum is found by an error evaluation function expressed by Equation (1-8) below.

$$K1 = \sum_i \left\{ \frac{I_{j+1}(x'_i, y'_i)}{I_j(x_i, y_i)} - \frac{S(x_i - dx, y_i - dy)}{S(x_i, y_i)} \right\}^2 \tag{1-8}$$

As an example of a specific shading model, in the first embodiment, as expressed by Equation (1-9) below, a function representing a quadratic surface passing central coordinates (w/2, h/2) of the image is used. The quadratic surface is used because a shading component in general is small at around a center of an image and increases as becoming distant from the center of the image.

$$S(x, y; a) = 1 - a\{(x - w/2)^2 + (y - h/2)^2\} \tag{1-9}$$

Therefore, by finding a quadratic coefficient (parameter) "a" for which the evaluation value K1' given by the error evaluation function (1-10) using Equation (1-9) becomes minimum (Equation (1-10')), the shading component "S" is able to be acquired.

$$K1' = \sum_i \left\{ \frac{I_{j+1}(x'_i, y'_i)}{I_j(x_i, y_i)} - \frac{S(x_i - dx, y_i - dy; a)}{S(x_i, y_i; a)} \right\}^2 \tag{1-10}$$

$$\min_a \left( \sum_i \left\{ \frac{I_{j+1}(x'_i, y'_i)}{I_j(x_i, y_i)} - \frac{S(x_i - dx, y_i - dy; a)}{S(x_i, y_i; a)} \right\}^2 \right) \tag{1-10'}$$

The shading detection unit 154 finds this parameter "a" by a calculation process illustrated in FIG. 8. FIG. 8 is a flow chart illustrating operations of the shading detection unit 154. First, at step S151, the shading detection unit 154 initializes the parameter "a".

At subsequent step S152, the shading detection unit 154 substitutes the parameter "a" and a difference $I_{j+1}(x'_i, y'_i) / I_j(x_i, y_i)$ in luminance at every set of coordinates $(x_i, y_i)$ in the area C1 calculated in step S13 into the error evaluation function (1-10) to calculate the evaluation value K1'.

At step S153, the shading detection unit 154 determines whether or not the evaluation value K1' is less than a specified threshold value. The threshold value is a value empirically set small enough so that when a corrected image is generated based on the parameter "a" substituted in each subsequent repeated process, a difference among the corrected images having the parameters "a" different from one another is not clearly recognized. This threshold value is set to end the repeated process and thus another ending condition may be set, for example, such that the repeated process is ended when a change in the evaluation value in the repetition becomes small enough. If the evaluation value K1' is equal to or greater than the threshold value (step S153: No), the shading detection unit 154 modifies the parameter "a" (step S154). Thereafter, the operations return to step S152. On the contrary, if the evaluation value K1' is less than the specified threshold value (step S153: Yes), the shading detection unit 154 determines the parameter "a" at that time as the parameter in Equation (1-9) (step S155). Equation (1-9) including this determined parameter "a" is an equation representing a modified shading model for the area C1.

Thereafter, the operations return to a main routine.

At step S15, the shading estimation unit 155 expands a range to which the modified shading model is applied to an area within the images $M_j$ and $M_{j+1}$ other than the area C1 and generates a correction image for correcting the shading in the whole area in the images. The correction image is an image having a shading model $S(x, y; a)$ as a luminance of each pixel.

At step S16, the image correction unit 156 corrects the image using the correction image generated in step S15. That is, the luminance $I(x, y)$ of each pixel in the images to be corrected is acquired, and by Equation (1-11), the subject component $T(x, y)$ is calculated.

$$T(x, y) = I(x, y) / S(x, y; a) \qquad (1\text{-}11)$$

Thereby, corrected images, from which the influence of the shading has been removed, are acquired. The images to be corrected are not limited to the images $M_j$ and $M_{j+1}$ used in generating the shading correction image, and may be other images captured in the microscope apparatus 10.

Further, at step S17, the calculation unit 150 outputs the corrected images. In response to that, the control unit 160 causes the display unit 130 to display the corrected images and the storage unit 140 to store image data corresponding to the corrected images.

As described above, according to the first embodiment, because a shading correction image is generated based on a luminance of an image itself, which is a target to be corrected, even if a chronological change in shading is generated in the microscope apparatus 10, highly accurate shading correction is able to be performed on the image. Further, according to the first embodiment, since a luminance in the image is separated into a subject component and a shading component, and the shading correction image is generated by extracting the shading component only, accuracy of the shading correction is able to be improved.

(Second Embodiment)

Next, a second embodiment of the present invention will be described.

An overall configuration and operations of a microscope system according to the second embodiment are common to the first embodiment, and the second embodiment is characterized in that a plurality of images are captured by changing a magnification of an imaging field of view and a shading correction image is generated by using these images. Therefore, hereinafter, only a process of generating the shading correction image by using the plurality of images having magnifications different from each another will be described.

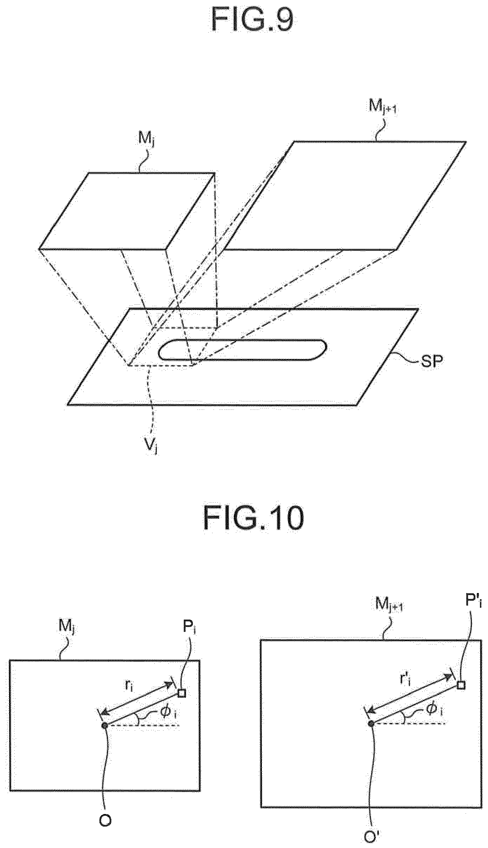

First, as illustrated in FIG. 9, the microscope system 1 images a field-of-view area $V_j$ of a specimen SP to acquire and image $M_j$. Next, a zoom is adjusted to change a magnification, and the same field-of-view area $V_j$ is imaged to acquire an image $M_{j+1}$. In this case, between the images $M_j$ and $M_{j+1}$, the whole image is a common portion in which the same subject is photographed.

In the calculation unit 150, the image adjusting unit 152 performs positional adjustment of the images $M_j$ and $M_{j+1}$, such that a center O of the image $M_j$ and a center O' of the image $M_{j+1}$ match each other. As illustrated in FIG. 10, between the images $M_j$ and $M_{j+1}$, a pixel $P_i$ positioned away from the center O of the image $M_j$ by a distance $r_i$ and at a rotation angle $\Phi_i$ from a specified axis and a pixel $P'_i$ positioned away from the center O' of the image $M_{j+1}$ by a distance $r'_i$ and at a rotation angle $\Phi_i$ from the specified axis are pixels corresponding to each other.

Subsequently, the difference acquiring unit 153 calculates a difference between luminance of the corresponding pixels of the images $M_j$ and $M_{j+1}$. If a magnification of the image $M_j$ is $m_j$ and a magnification of the image $M_{j+1}$ is $m_{j+1}$, the distance $r'_i$ is able to be expressed by Equation (2-1) below.

$$r'_i = (m_{j+1} / m_j) \times r_i \qquad (2\text{-}1)$$

As described above, a luminance I of each pixel is composed of a subject component T and a shading component S, and thus a luminance $I_j(r_i, \Phi_i)$ of the pixel $P_i$ and a luminance $I_{j+1}(r'_i, \Phi_i)$ of the pixel $P'_i$ are able to be expressed by Equations (2-2) and (2-3) below, respectively.

$$I_j(r_i, \phi_i) = T(r_i, \phi_i) \times S(r_i, \phi_i) \qquad (2-2)$$

$$I_{j+1}(r'_i, \phi_i) = T_{j+1}(r'_i, \phi_i) \times S_{j+1}(r'_i, \phi_i) \qquad (2-3)$$

Generally, when an imaging magnification is changed, shading is also changed. However, if a change in the magnification is small, the change in the shading is extremely small and is negligible. In contrast, a change in a subject image in the image strictly coincides with the change in the magnification. In other words, Equation (2-4) below holds.

$$T_{j+1}(r'_i, \phi_i) = T(r_i, \phi_i) \qquad (2-4)$$

Therefore, from Equations (2-2) to (2-4), a difference $I_{j+1}(r'_i) / I_j(r_i)$ in luminance is given by Equation (2-5) below.

$$I_{j+1}(r'_i, \phi_i) / I_j(r_i, \phi_i) = S_{j+1}(r'_i, \phi_i) / S(r_i, \phi_i) \qquad (2-5)$$

As expressed by Equation (2-5), the difference $I_{j+1}(r'_i, \Phi_i) / I_j(r_i, \Phi_i)$ between the luminance corresponds to the change in the shading component. Generally, because the shading component changes axisymmetrically according to a distance from the optical axis L of the optical system, Equation (2-5) is able to be rewritten into Equation (2-6) below.

$$I_{j+1}(r'_i, \phi_i) / I_j(r_i, \phi_i) = S_{j+1}(r'_i) / S(r_i) \qquad (2-6)$$

The difference acquiring unit 153 calculates such a difference $I_{j+1}(r'_i, \Phi_i) / I_j(r_i, \phi_i)$ for every pixel in the image $M_j$.
Subsequently, the shading detection unit 154 generates a shading model that approximates an influence of the shading in the images $M_j$ and $M_{j+1}$, and based on the difference $I_{j+1}(r'_i, \phi_i) / I_j(r_i, \phi_i)$ at each set of coordinates, modifies the shading model. In the second embodiment, an error evaluation function for modifying the shading model is given by Equation (2-7) below and calculation to find a shading model $S(r_i)$ that minimizes an evaluation value K2 is performed.

$$K2 = \sum_i \left\{ \frac{I_{j+1}(r'_i, \phi_i)}{I_j(r_i, \phi_i)} - \frac{S(r'_i)}{S(r_i)} \right\}^2 \qquad (2-7)$$

Further, as a specific example of the shading model, in the second embodiment, as expressed by Equation (2-8) below, a function expressing a quadratic surface that changes dependently on a distance "r" from the center of the image $M_j$ is used.

$$S(r; b) = 1 - b \times r^2 \qquad (2-8)$$

Therefore, by finding a parameter "b", which is a quadratic coefficient for which an evaluation value K2' given by the error evaluation function (2-9) using Equation (2-7) becomes minimum (Equation (2-9')), the shading component S is able to be acquired.

$$K2' = \sum_i \left\{ \frac{I_{j+1}(r'_i, \phi_i)}{I_j(r_i, \phi_i)} - \frac{S(r'_i ; b)}{S(r_i ; b)} \right\}^2$$

$$= \sum_i \left\{ \frac{I_{j+1}(r'_i, \phi_i)}{I_j(r_i, \phi_i)} - \frac{S\left(\frac{m_{j+1}}{m_j} r_i ; b\right)}{S(r_i ; b)} \right\}^2 \tag{2-9}$$

$$\min_b \left( \sum_i \left\{ \frac{I_{j+1}(r'_i, \phi_i)}{I_j(r_i, \phi_i)} - \frac{S\left(\frac{m_{j+1}}{m_j} r_i ; b\right)}{S(r_i ; b)} \right\}^2 \right) \tag{2-9'}$$

The shading detection unit 154 finds this parameter "b" by the calculation process illustrated in FIG. 8. However, in FIG. 8, the parameter "a" is replaced by the parameter "b" and the evaluation value K1' is replaced by the evaluation value K2'. Equation (2-8) including the parameter "b" determined thereby is an equation that expresses a shading model that has been modified.

Subsequently, the shading estimation unit 155 expands a range to which the modified shading model is applied to the whole image $M_{j+1}$ (that is, an area a little larger than the image $M_j$) and generates a correction image for correcting the shading in the whole area in the image $M_j$ and image $M_{j+1}$.

A process thereafter is similar to that of the first embodiment.

As described above, according to the second embodiment, based on the luminance of the pixels of the whole image $M_j$, the correction image is generated, and thus highly accurate shading correction is able to be performed.

(Third Embodiment)

Next, a third embodiment of the present invention will be described.

An overall configuration and operations of a microscope system according to the third embodiment are common to the first embodiment, and the third embodiment is characterized in that a plurality of images are captured by rotating an imaging field of view and a shading correction image is generated by using these images. Therefore, hereinafter, only a process of generating the shading correction image by using the plurality of images having coordinate axes on the XY-plane that intersect each other will be described.

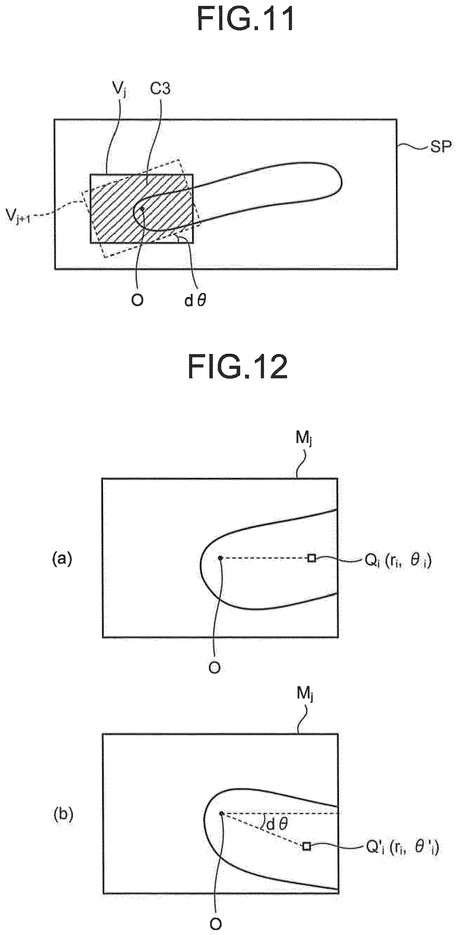

First, the microscope system 1 captures an imaging field of view $V_j$ of a specimen SP and acquires an image $M_j$ as illustrated in FIG. 11 and FIG. 12. Next, the specimen stage 101 is rotated in the XY-plane by an angle $d\theta$ with respect to a specified rotation center point, an imaging field of view $V_{j+1}$ is imaged to acquire an image $M_{j+1}$. In the third embodiment, the rotation center point is set to a center O of the imaging field of view $V_j$. In this case, between the images $M_j$ and $M_{j+1}$, an area C3 illustrated in FIG. 11 is a common portion in which the same subject is photographed. Further, as illustrated in FIG. 12 at (a) and (b), a pixel $Q_i$ positioned away by a distance $r_i$ from the rotation center point (center O) of the image $M_j$ and at an angle $\theta_i$ from a specified axis and a pixel $Q'_i$ positioned away by the distance $r_i$ from the rotation center point (center O) of the image $M_{j+1}$ and at an angle $\theta'_i$ ($= \theta_i - d\theta$) from the specified axis are pixels corresponding to each other.

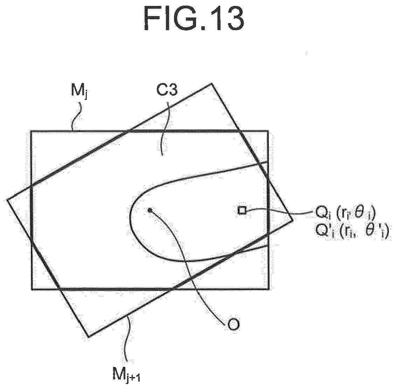

In the calculation unit 150, as illustrated in FIG. 13, the image adjusting unit 152 performs rotates the image $M_{j+1}$ with respect to the image $M_j$ by the angle $d\theta$ and performs positional adjustment such that the area C3 match between the images $M_j$ and $M_{j+1}$.

Subsequently, the difference acquiring unit 153 calculates a difference in luminance of the pixels corresponding between the images $M_j$ and $M_{j+1}$. Specifically, a difference $I_{j+1}(r_i, \theta'_i) / I_j(r_i, \theta_i)$ between a luminance $I_j(r_i, \theta_i)$ of the pixel $Q_i$ and a luminance $I_{j+1}(r_i, \theta'_i)$ of the pixel $Q'_i$ is calculated.

As described above, the luminance I of each pixel is composed of the subject component T and shading component S, the luminance $I_j(r_i, \theta_i)$ of the pixel $Q_i$ and the luminance $I_{j+1}(r_i, \theta'_i)$ of the pixel $Q'_i$ are able to be expressed respectively by Equations (3-1) and (3-2) below.

$$I_j(r_i, \theta_i) = T(r_i, \theta_i) \times S(r_i, \theta_i) \qquad (3-1)$$

$$I_{j+1}(r_i, \theta'_i) = T_{j+1}(r_i, \theta'_i) \times S_{j+1}(r_i, \theta'_i) \qquad (3-2)$$

Further, since the subject components T between the corresponding pixels are equal to each other, Equation (3-3) below holds.

$$T(r_i, \theta_i) = T_{j+1}(r_i, \theta'_i) \qquad (3-3)$$

Therefore, from Equations (3-1) to (3-3), the difference $I_{j+1}(r_i, \theta'_i) / I_j(r_i, \theta_i)$ is given by Equation (3-4) below.

$$I_{j+1}(r_i, \theta'_i) / I_j(r_i, \theta_i) = S_{j+1}(r_i, \theta'_i) / S_j(r_i, \theta_i)$$

$$(3-4)$$

That is, the difference $I_{j+1}(r_i, \theta'_i) / I_j(r_i, \theta_i)$ in luminance corresponds to a change in the shading component S.
The shading component S includes a shading component (hereinafter, referred to as "shading component Sl") caused by the lens and a shading component (hereinafter, referred to as "shading component Sm") caused by a factor other than the lens, such as illumination. That is, the shading component S is given by Equation (3-5) below.

$$S(r_i, \theta_i) = Sm(r_i, \theta_i) \times Sl(r_i, \theta_i) \qquad (3-5)$$

Of these, the shading component SL is generated axisymmetrically about the optical axis L and thus as expressed by Equation (3-6), is able to be modelled only by the distance $r_i$ from the center of the image to the pixel.

$$S(r_i, \theta_i) = Sm(r_i, \theta_i) \times Sl(r_i) \qquad (3-6)$$

From Equations (3-5) and (3-6), Equation (3-4) is rewritable into Equation (3-7) below.

$$\frac{I_{j+1}(r_i, \theta'_i)}{I_j(r_i, \theta_i)} = \frac{Sm(r_i, \theta'_i)}{Sm(r_i, \theta_i)} \qquad (3-7)$$

From Equation (3-7), the difference $I_{j+1}(r_i, \theta'_i) / I_j(r_i, \theta_i)$ between the corresponding pixels can be said to represent a change in the shading component Sm caused by the illumination and the like. The difference acquiring unit 153 calculates such a difference $I_{j+1}(r_i, \theta'_i) / I_j(r_i, \theta_i)$ for every pixel in the area C3.
Subsequently, the shading detection unit 154 generates a shading model that approximates an influence of the shading in the images $M_j$ and $M_{j+1}$ and modifies the shading model based on the difference $I_{j+1}(r_i, \theta'_i) / I_j(r_i, \theta_i)$ at each set of coordinates. In the third embodiment, an error evaluation function for modifying the shading model is given by Equation (3-8) below and calculation to find a shading model $Sm(r_i, \theta_i)$ that minimizes an evaluation value K3 is performed.

$$K3 = \sum_i \left\{ \frac{I_{j+1}(r_i, \theta'_i)}{I_j(r_i, \theta_i)} - \frac{Sm(r_i, \theta'_i)}{Sm(r_i, \theta_i)} \right\}^2 \qquad (3-8)$$

As a specific example of the shading model, in the third embodiment, as expressed by Equation (3-9) below, a function representing a quadratic surface that changes dependently on a distance "r" and an angle θ from the center

of the image $M_j$ is used.

$$S(r, \theta; c) = 1 - c\left\{ (r\cos\theta - r_0\cos\theta_0)^2 + (r\sin\theta - r_0\sin\theta_0)^2 \right\}$$

$$(3-9)$$

In Equation (3-9), $r_0$ and $\theta_0$ are specified constants.

Therefore, by finding a parameter "c" that is a quadratic coefficient for which an evaluation value K3' given by the error evaluation function (3-10) using Equation (3-9) becomes minimum (Equation (3-10')), the shading component S is able to be acquired.

$$K3' = \sum_i \left\{ \frac{I_{j+1}(r_i, \theta'_i)}{I_j(r_i, \theta_i)} - \frac{S(r_i, \theta'_i; c)}{S(r_i, \theta_i; c)} \right\}^2$$

$$= \sum_i \left\{ \frac{I_{j+1}(r_i, \theta'_i)}{I_j(r_i, \theta_i)} - \frac{S(r_i, \theta_i - d\theta; c)}{S(r_i, \theta_i; c)} \right\}^2 \qquad (3-10)$$

$$\min_c \left( \sum_i \left\{ \frac{I_{j+1}(r_i, \theta'_i)}{I_j(r_i, \theta_i)} - \frac{S(r_i, \theta_i - d\theta; c)}{S(r_i, \theta_i; c)} \right\}^2 \right) \qquad (3-10')$$

The shading detection unit 154 finds this parameter "c" by the calculation process illustrated in FIG. 8. However, in FIG. 8, the parameter "a" is replaced by the parameter "c" and the evaluation value K1' is replaced by the evaluation value K3'. Equation (3-9) including the parameter "c" determined thereby is an equation representing a modified model of the shading component Sm caused by illumination and the like.

Subsequently, the shading estimation unit 155 generates a correction image for correcting shading in the whole area in the image $M_j$ and image $M_{j+1}$. Since the shading component Sl caused by the lens has a small chronological change, the shading component Sl is able to be predicted accurately by the cosine fourth law. The cosine fourth law represents a relation between an angle $\Theta$ of incident light with respect to an optical axis and illuminance I' of light after incidence, when light of an illuminance $I_0$ is incident on a lens.

$$I' = I_0\cos^4\Theta \qquad (3-11)$$

The shading estimation unit 155 generates a shading model Sl(r) representing the shading component Sl caused by the lens, based on Equation (3-11). As the shading model Sl(r), for example, based on Equation (3-11), a lookup table made of shading amounts corresponding to values of the distance "r" from the optical axis center may be used. The storage unit 140 stores therein a plurality of types of lookup tables generated for respective lenses and the shading estimation unit 155 reads a lookup table corresponding to a selected lens and uses this lookup table to find the shading component Sl.

Further, the shading estimation unit 155 expands the shading model given by Equation (3-9) to the whole images (an area of the image $M_j$ and image $M_{j+1}$ other than the area C1) and by using the shading model Sl(r) based on the above described lookup table, as expressed by Equation (3-12) below, generates a correction image for correcting the total shading in the whole area in the image $M_j$ and image $M_{j+1}$.

$$S_{TOTAL} = Sl(r) \times Sm(r, \theta) \qquad (3-12)$$

A process thereafter is similar to that of the first embodiment.

As described above, according to the third embodiment, shading comparatively large in a chronological change caused by illumination and the like is also able to be corrected accurately. Therefore, even when many images are captured, or even when an imaging time period is prolonged, accurate shading correction for each image is possible.

(Fourth Embodiment)

Next, a fourth embodiment of the present invention will be described.

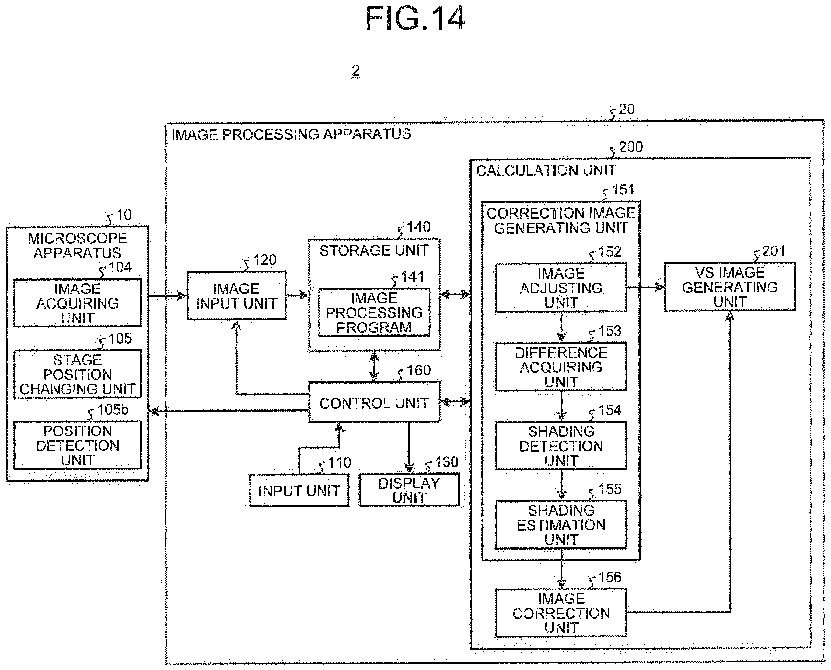

FIG. 14 is a block diagram illustrating a configuration of a microscope system according to a fourth embodiment. As illustrated in FIG. 14, a microscope system 2 according to the fourth embodiment includes, instead of the image processing apparatus 11 illustrated in FIG. 1, an image processing apparatus 20. The image processing apparatus 20 includes a calculation unit 200 further having a virtual slide (VS) image generating unit 201, in contrast to the calculation unit 150 illustrated in FIG. 1. Configurations of the image processing apparatus 20 and microscope system 2, other than the VS image generating unit 201, are similar to those described in the first embodiment.

The VS image generating unit 201 connects a plurality of images captured while an imaging field of view is moved parallel with respect to a specimen SP by the microscope apparatus 10 to generate an image (VS image) corresponding to the whole specimen SP.

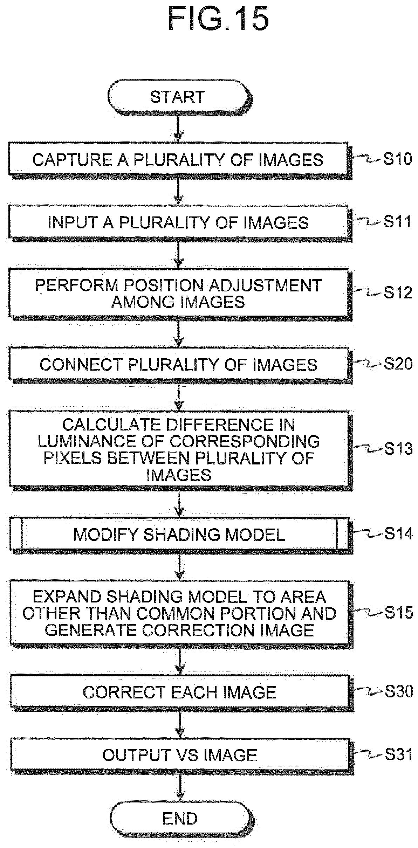

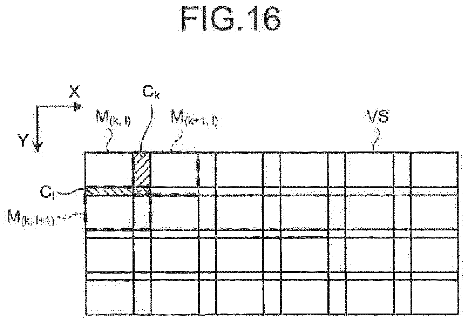

Next, the operations of the microscope system 2 will be described. FIG. 15 is a flow chart illustrating the operations of the microscope system 2. Further, FIG. 16 is a schematic diagram illustrating a virtual slide image generated by the VS image generating unit.

First, at step S10, the microscope apparatus 10 captures, under the control of the control unit 160, a plurality of images having a part of imaging fields of view overlapping one another, while moving the imaging field of view parallel with respect to a specimen SP. Operations of subsequent steps S11 and S12 are similar to those of the first embodiment.

At step S20 subsequent to step S12, the VS image generating unit 201 connects a plurality of images that have been positionally adjusted by the image adjusting unit 152 to generate a virtual slide image VS, as illustrated in FIG. 16. In this virtual slide image VS, an area $C_k$ is a mutually overlapping common portion (that is, their subjects match each other) between images $M_{(k, l)}$ and $M_{(K+1, l)}$ adjacent to each other in the X-direction, and an area $C_l$ is a mutually overlapping common portion between image $M_{(k, i)}$ and $M_{(k, l+1)}$ adjacent to each other in the y-direction (k, l = 1, 2, ...).

Operations of subsequent steps S13 to S15 are similar to those of the first embodiment. However, a target to be calculated then may be all of the common portions (area $C_k$ and area $C_l$) in the virtual slide image VS or some of the common portions. In the latter case, specifically, it may be: all of the areas $C_k$ only; all of the areas $C_l$ only; the first and last areas $C_k$ or areas $C_l$ only; an area $C_k$ or area $C_l$ near the center of the virtual slide image VS only; areas $C_k$ or areas $C_l$ extracted at specified intervals; or areas $C_k$ or areas $C_l$ selected randomly. If a plurality of common portions are the target to be calculated, a plurality of correction images corresponding to these common portions are generated.

At step S30 subsequent to step S15, the image correction unit 156 corrects each image $M_{(k, l)}$ forming the virtual slide image VS by using the correction image generated in step S15. If a plurality of correction images are generated in step S15, the correction image may be determined according to a position of the common portion that became the basis of the correction image. For example, if the correction image is generated from all of the areas $C_k$, the images $M_{(k, l)}$ and $M_{(K+1, l)}$ adjacent to each other in the X-direction are corrected by using the correction image based on the area $C_k$, which is the common portion of both of these images. Further, if the correction image is generated from all of the areas $C_l$, the images $M_{(k, l)}$ and $M_{(K, l+1)}$ adjacent to each other in the Y-direction are corrected by using the correction image based on the area $C_l$, which is the common portion of both of these images. Or, if the correction image is generated from the areas $C_k$ or areas $C_l$ extracted at the specified intervals or from the areas $C_k$ or areas $C_l$ selected randomly, an image $M_{(k, l)}$ within a specified range from the area $C_k$ or area $C_l$ may be corrected by using the correction image based on the area $C_k$ or area $C_l$.

At subsequent step S31, the calculation unit 200 outputs a virtual slide image VS connected of the corrected images. Accordingly, the control unit 160 causes the display unit 130 to display the virtual slide image VS and the storage unit 140 to store image data corresponding to the virtual slide image VS.

As described above, according to the fourth embodiment, since a virtual slide image is formed by images in which shadings generated in individual imaging fields of view are corrected, a virtual slide image of a high image quality is able to be acquired.

(Modified Example)

In the above described first to third embodiments, the processes for the images acquired by the microscope apparatus 10 have been described, but the image processing apparatus 11 may process images acquired by any of various imaging devices other than the microscope apparatus 10. For example, the image processing apparatus 11 may be applied to a digital camera that is able to capture a panoramic image. In this case, a panoramic image of a good image quality may be generated by capturing a plurality of images with end portions of their fields overlapping one another, correcting each image by using a correction image generated based on the overlapped portion of the fields of view, and connecting these images.

The present invention is not limited to each of the above described first to fourth embodiments and the modified example as-is, and formation of various inventions is possible by combining as appropriate a plurality of the structural elements disclosed in the respective first to fourth embodiments. For example, some of the structural elements from all of the structural elements disclosed in the first to fourth embodiments may be excluded for the formation. Or, structural elements disclosed in different ones of the embodiments may be combined as appropriate for the formation.

Reference Signs List

| | |
|---|---|
| 1, 2 | Microscope system |
| 10 | Endoscope apparatus |
| 11, 20 | Image processing apparatus |
| 100 | Arm |
| 101 | Specimen stage |
| 102 | Objective lens |
| 103 | Lens barrel |
| 104 | Image acquiring unit |
| 105 | Stage position changing unit |
| 105a | Motor |
| 105b | Position detection unit |
| 106 | Trinocular lens barrel unit |
| 107 | Eyepiece unit |
| 108 | Revolver |
| 110 | Input unit |
| 120 | Image input unit |
| 130 | Display unit |
| 140 | Storage unit |
| 141 | Image processing program |
| 150, 200 | Calculation unit |
| 151 | Correction image generating unit |
| 152 | Image adjusting unit |
| 153 | Difference acquiring unit |
| 154 | Shading detection unit |
| 155 | Shading estimation unit |
| 156 | Image correction unit |
| 160 | Control unit |
| 201 | VS image generating unit |

**Claims**

1. An image processing apparatus (11), comprising:

    an image inputting unit (120) configured to input a plurality of images having a portion where at least a part of subjects of the plurality of images is common to one another; and
    a correction image generating unit (151) configured to generate a correction image used for correcting the plurality of images,
    wherein the correction image generating unit (151) includes:

        a difference acquiring unit (153) configured to acquire a difference between luminance of pixels from two arbitrary images of the plurality of images, the two arbitrary images having a common portion (C1) where the subjects are common to one another; and
        a shading detection unit (154) configured to generate a shading model that approximates an influence of shading in the arbitrary images, and based on the difference within the common portion (C1), modify the shading model to a modified shading model,

    **characterized in that**
    the correction image generating unit (151) further includes a shading estimation unit (155) configured to expand a range to which the modified shading model is applied to an area within the arbitrary images other than the common portion (C1) and generate a correction image for correcting the shading in the whole area in the arbitrary images.

2. The image processing apparatus (11) according to claim 1, wherein
the correction image generating unit (151) further includes an image adjusting unit (152) configured to perform positional adjustment of the arbitrary images and match the subjects in the common portion, and
the difference acquiring unit (153) is configured to acquire the difference in a state in which the positional adjustment has been performed by the image adjusting unit (152).

3. The image processing apparatus (11) according to any one of claims 1 to 2, wherein the plurality of images are images that are captured by parallel movement of an imaging field of view.

4. The image processing apparatus (11) according to any one of claims 1 to 2, wherein the plurality of images are images that are captured by changing an imaging magnification.

5. The image processing apparatus (11) according to any one of claims 1 to 2, wherein the plurality of images are images that are captured by rotating an imaging field of view.

6. An imaging apparatus, comprising:

   the image processing apparatus (11) according to any one of claims 1 to 5; and
   an imaging unit configured to image the subjects.

7. A microscope system, comprising:

   the image processing apparatus (11) according to any one of claims 1 to 5; and
   a microscope apparatus (10) that includes:

      a stage (101) on which a specimen as the subjects is able to be placed;
      an optical system provided opposite to the stage (101);
      an image acquiring unit (104) configured to acquire an image by imaging a field of view set on the specimen via the optical system; and
      a stage position changing unit (105) configured to change the imaging field of view by moving at least one of the stage (10) and optical system in a direction orthogonal to an optical axis of the optical system.

8. An image processing method, comprising:

   an image input step (S11) of inputting a plurality of images having a portion where at least a part of subjects of the plurality of images is common to one another;
   a difference acquiring step (S13) of acquiring a difference between luminance of pixels from two arbitrary images of the plurality of images, the two arbitrary images having a common portion where the subjects are common to one another; and
   a shading detection step (S14) of generating a shading model that approximates an influence of shading in the arbitrary images, and based on the difference within the common portion (C1), modify the shading model to a modified shading model,
   **characterized by**
   a correction image generating step (S15, S16) of expanding a range to which the modified shading model is applied to an area within the arbitrary images other than the common portion (C1) and generate a correction image for correcting the shading in the whole area in the arbitrary images.

9. An image processing program that causes a computer to execute:

   an image input step (S11) of inputting a plurality of images having a portion where at least a part of subjects of the plurality of images is common to one another;
   a difference acquiring step (S13) of acquiring a difference between luminance of pixels from two arbitrary images of the plurality of images, the two arbitrary images having a common portion where the subjects are common to one another; and
   a shading detection step (S14) of generating a shading model that approximates an influence of shading in the arbitrary images, and based on the difference within the common portion (C1), modify the shading model to a modified shading model,

**characterized by**

a correction image generating step (S15, S16) of expanding a range to which the modified shading model is applied to an area within the arbitrary images other than the common portion (C1) and generate a correction image for correcting the shading in the whole area in the arbitrary images.

**Patentansprüche**

1. Bildverarbeitungsvorrichtung (11) umfassend:

eine Bildeingabeeinheit (120), die zum Eingeben mehrerer Bilder konfiguriert ist, die einen Abschnitt aufweisen, in dem zumindest ein Teil von Subjekten der mehreren Bilder gemeinsam ist; und
eine Korrekturbilderzeugungseinheit (151), die zum Erzeugen eines Korrekturbilds konfiguriert ist, das zum Korrigieren der mehreren Bilder verwendet wird,
wobei die Korrekturbilderzeugungseinheit (151) umfasst:

eine Unterschiedserfassungseinheit (153), die zum Erfassen eines Unterschieds zwischen einer Leuchtdichte von Pixeln von zwei willkürlichen Bildern aus den mehreren Bilder konfiguriert ist, wobei die beiden willkürlichen Bilder einen gemeinsamen Abschnitt (C1) aufweisen, in dem die Subjekte gemeinsam sind; und
eine Abschattungserkennungseinheit (154), die zum Erzeugen eines Abschattungsmodells, das einen Einfluss des Abschattens in den willkürlichen Bildern approximiert, und auf Basis des Unterschieds in dem gemeinsamen Abschnitt (C1), Ändern des Abschattungsmodells in ein modifiziertes Abschattungsmodell konfiguriert ist,

**dadurch gekennzeichnet, dass**
die Korrekturbilderzeugungseinheit (151) ferner eine Abschattungsschätzungseinheit (155) umfasst, die zum Ausdehnen eines Bereichs, auf den das modifizierte Abschattungsmodell angewendet wird, auf einen Bereich innerhalb der willkürlichen Bilder, der nicht der gemeinsame Abschnitt (C1) ist, und Erzeugen eines Korrekturbilds zum Korrigieren der Abschattung im gesamten Bereich in den willkürlichen Bildern konfiguriert ist.

2. Bildverarbeitungsvorrichtung (11) nach Anspruch 1, wobei
die Korrekturbilderzeugungseinheit (151) ferner eine Bildeinstellungseinheit (152) umfasst, die zum Durchführen von Positionseinstellung der willkürlichen Bilder und Zuordnen der Subjekte im gemeinsamen Abschnitt konfiguriert ist, und
die Unterschiedserfassungseinheit (153) zum Erfassen des Unterschieds in einem Zustand konfiguriert ist, in dem die Positionseinstellung von der Bildeinstellungseinheit (152) durchgeführt wurde.

3. Bildverarbeitungsvorrichtung (11) nach einem der Ansprüche 1 bis 2, wobei die mehreren Bilder Bilder sind, die durch parallele Bewegung eines Bildgebungssichtfelds aufgenommen werden.

4. Bildverarbeitungsvorrichtung (11) nach einem der Ansprüche 1 bis 2, wobei die mehreren Bilder Bilder sind, die durch Ändern einer Bildvergrößerung aufgenommen werden.

5. Bildverarbeitungsvorrichtung (11) nach einem der Ansprüche 1 bis 2, wobei die mehreren Bilder Bilder sind, die durch Drehen eines Bildgebungssichtfelds aufgenommen werden.

6. Bildgebungsvorrichtung, umfassend:

die Bildverarbeitungsvorrichtung (11) nach einem der Ansprüche 1 bis 5; und
eine Bildgebungseinheit, die zum Abbilden der Subjekte konfiguriert ist.

7. Mikroskopsystem, umfassend:

die Bildverarbeitungsvorrichtung (11) nach einem der Ansprüche 1 bis 5; und
eine Mikroskopvorrichtung (10), umfassend:

einen Tisch (101) auf den eine Probe als die Subjekte platziert werden kann;

ein optisches System, das gegenüber dem Tisch (101) vorgesehen ist;

eine Bilderfassungseinheit (104), die zum Erfassen eines Bilds durch Abbilden eines Sichtfelds konfiguriert ist, das über das optische System auf die Probe eingestellt wird; und

eine Tischpositionsänderungseinheit (105), die zum Ändern des Bildgebungssichtfelds konfiguriert ist, indem mindestens einer/s aus dem Tisch (10) und dem optischen System in eine Richtung bewegt wird, die rechtwinklig zu einer optischen Achse des optischen Systems verläuft.

**8.** Bildverarbeitungsverfahren, umfassend:

einen Bildeingabeschritt (S11) zum Eingeben mehrerer Bilder, die einen Abschnitt aufweisen, in dem zumindest ein Teil von Subjekten der mehreren Bilder gemeinsam ist;

ein Unterschiedserfassungsschritt (S13) zum Erfassen eines Unterschieds zwischen einer Leuchtdichte von Pixeln von zwei willkürlichen Bildern der mehreren Bilder, wobei die beiden willkürlichen Bilder einen gemeinsamen Abschnitt aufweisen, in dem die Subjekte gemeinsam sind; und

einen Abschattungserkennungsschritt (S14) zum Erzeugen eines Abschattungsmodells, das einen Einfluss des Abschattens in den willkürlichen Bildern approximiert, und aufgrund des Unterschieds in den gemeinsamen Abschnitten (C1) das Abschattungsmodells in ein modifiziertes Abschattungsmodell ändert,

**gekennzeichnet durch**

einen Korrekturbilderzeugungsschritt (S15, S16) zum Ausdehnen eines Bereichs, auf den das modifizierte Abschattungsmodell angewendet wird, auf einen Bereich innerhalb der willkürlichen Bilder, der nicht der gemeinsame Abschnitt (C1) ist, und Erzeugen eines Korrekturbilds zum Korrigieren der Abschattung im gesamten Bereich in den willkürlichen Bildern.

**9.** Ein Bildverarbeitungsprogramm, das veranlasst, dass ein Computer ausführt:

einen Bildeingabeschritt (S11) zum Eingeben mehrerer Bilder, die einen Abschnitt aufweisen, in dem zumindest ein Teil von Subjekten der mehreren Bilder gemeinsam ist;

ein Unterschiedserfassungsschritt (S13) zum Erfassen eines Unterschieds zwischen einer Leuchtdichte von Pixeln von zwei willkürlichen Bildern der mehreren Bilder, wobei die beiden willkürlichen Bilder einen gemeinsamen Abschnitt aufweisen, in dem die Subjekte gemeinsam sind; und

einen Abschattungserkennungsschritt (S14) zum Erzeugen eines Abschattungsmodells, das einen Einfluss des Abschattens in den willkürlichen Bildern approximiert, und aufgrund des Unterschieds in den gemeinsamen Abschnitten (C1) das Abschattungsmodell in ein modifiziertes Abschattungsmodell ändert,

**gekennzeichnet durch**

einen Korrekturbilderzeugungsschritt (S15, S16) zum Ausdehnen eines Bereichs, auf den das modifizierte Abschattungsmodell angewendet wird, auf einen Bereich innerhalb der willkürlichen Bilder, der nicht der gemeinsame Abschnitt (C1) ist, und Erzeugen eines Korrekturbilds zum Korrigieren der Abschattung im gesamten Bereich in den willkürlichen Bildern.

## Revendications

**1.** Appareil de traitement d'image (11), comprenant :

une unité d'entrée d'image (120) configurée pour entrer une pluralité d'images ayant une partie dans laquelle au moins une partie de sujets de la pluralité d'images est commune ; et

une unité de génération d'image de correction (151) configurée pour générer une image de correction utilisée pour corriger la pluralité d'images,

l'unité de génération d'image de correction (151) comprenant :

une unité d'acquisition de différence (153) configurée pour acquérir une différence entre une luminance de pixels de deux images arbitraires de la pluralité d'images, les deux images arbitraires ayant une partie commune (C1) dans laquelle les sujets sont communs ; et

une unité de détection d'ombrage (154) configurée pour générer un modèle d'ombrage qui approxime une influence d'ombrage dans les images arbitraires et, sur la base de la différence à l'intérieur de la partie commune (C1), modifier le modèle d'ombrage en un modèle d'ombrage modifié,

**caractérisé par le fait que**
l'unité de génération d'image de correction (151) comprend en outre une unité d'estimation d'ombrage (155) configurée pour étendre une plage dans laquelle le modèle d'ombrage modifié est appliqué à une zone à l'intérieur des images arbitraires autre que la partie commune (C1) et générer une image de correction pour corriger l'ombrage dans toute la zone dans les images arbitraires.

2. Appareil de traitement d'image (11) selon la revendication 1, dans lequel
l'unité de génération d'image de correction (151) comprend en outre une unité d'ajustement d'image (152) configurée pour réaliser un ajustement de position des images arbitraires et mettre en correspondance les sujets dans la partie commune, et
l'unité d'acquisition de différence (153) est configurée pour acquérir la différence dans un état dans lequel l'ajustement de position a été réalisé par l'unité d'ajustement d'image (152).

3. Appareil de traitement d'image (11) selon l'une quelconque des revendications 1 et 2, dans lequel la pluralité d'images sont des images qui sont capturées par mouvement parallèle d'un champ de vision d'imagerie.

4. Appareil de traitement d'image (11) selon l'une quelconque des revendications 1 et 2, dans lequel la pluralité d'images sont des images qui sont capturées par changement d'un grossissement d'imagerie.

5. Appareil de traitement d'image (11) selon l'une quelconque des revendications 1 et 2, dans lequel la pluralité d'images sont des images qui sont capturées par rotation d'un champ de vision d'imagerie.

6. Appareil d'imagerie, comprenant :

   l'appareil de traitement d'image (11) selon l'une quelconque des revendications 1 à 5 ; et
   une unité d'imagerie configurée pour l'imagerie des sujets.

7. Système de microscope, comprenant :

   l'appareil de traitement d'image (11) selon l'une quelconque des revendications 1 à 5 ; et
   un appareil de microscope (10) qui comprend :

      une platine (101) sur laquelle un échantillon tel que les sujets est apte à être placé ;
      un système optique prévu à l'opposé de la platine (101) ;
      une unité d'acquisition d'image (104) configurée pour acquérir une image par imagerie d'un champ de vision réglé sur l'échantillon par l'intermédiaire du système optique ; et
      une unité de changement de position de platine (105) configurée pour changer le champ de vision d'imagerie par déplacement d'au moins un parmi la platine (10) et le système optique, dans une direction orthogonale à un axe optique du système optique.

8. Procédé de traitement d'image, comprenant :

   une étape d'entrée d'image (S11) pour entrer une pluralité d'images ayant une partie dans laquelle au moins une partie de sujets de la pluralité d'images est commune ;
   une étape d'acquisition de différence (S13) pour acquérir une différence entre une luminance de pixels de deux images arbitraires de la pluralité d'images, les deux images arbitraires ayant une partie commune dans laquelle les sujets sont communs ; et
   une étape de détection d'ombrage (S14) pour générer un modèle d'ombrage qui approxime une influence d'ombrage dans les images arbitraires et, sur la base de la différence à l'intérieur de la partie commune (C1), modifier le modèle d'ombrage en un modèle d'ombrage modifié,
   **caractérisé par**
   une étape de génération d'image de correction (S15, S16) pour étendre une plage dans laquelle le modèle d'ombrage modifié est appliqué à une zone à l'intérieur des images arbitraires autre que la partie commune (C1) et générer une image de correction pour corriger l'ombrage dans toute la zone dans les images arbitraires.

9. Programme de traitement d'image qui amène un ordinateur à exécuter :

   une étape d'entrée d'image (S11) pour entrer une pluralité d'images ayant une partie dans laquelle au moins une partie de sujets de la pluralité d'images est commune ;

une étape d'acquisition de différence (S13) pour acquérir une différence entre une luminance de pixels de deux images arbitraires de la pluralité d'images, les deux images arbitraires ayant une partie commune dans laquelle les sujets sont communs ; et

une étape de détection d'ombrage (S14) pour générer un modèle d'ombrage qui approxime une influence d'ombrage dans les images arbitraires et, sur la base de la différence à l'intérieur de la partie commune (C1), modifier le modèle d'ombrage en un modèle d'ombrage modifié,

**caractérisé par**

une étape de génération d'image de correction (S15, S16) pour étendre une plage dans laquelle le modèle d'ombrage modifié est appliqué à une zone à l'intérieur des images arbitraires autre que la partie commune (C1) et générer une image de correction pour corriger l'ombrage dans toute la zone dans les images arbitraires.

# FIG.1

<u>1</u>

# FIG.2

EP 2 796 916 B1

# FIG.3

START

CAPTURE A PLURALITY OF IMAGES — S10

INPUT A PLURALITY OF IMAGES — S11

PERFORM POSITION ADJUSTMENT AMONG IMAGES — S12

CALCULATE DIFFERENCE IN LUMINANCE OF CORRESPONDING PIXELS BETWEEN PLURALITY OF IMAGES — S13

MODIFY SHADING MODEL — S14

EXPAND SHADING MODEL TO AREA OTHER THAN COMMON PORTION AND GENERATE CORRECTION IMAGE — S15

CORRECT IMAGE — S16

OUTPUT IMAGE — S17

END

22

# FIG.4

# FIG.5

# FIG.6

(a)

$M_j$

$C1$

$h$

$(x_i, y_i)$

$w$

(b)

$M_{j+1}$

$(x'_i, y'_i)=(x_i-dx, y_i-dy)$

$C1$

$h$

$w$

# FIG.7

$M_j$   C1   $M_{j+1}$

$(x_i, y_i)$

# FIG.8

MODIFY SHADING MODEL

↓

INITIALIZE PARAMETER "a"    S151

↓

CALCULATE EVALUATION VALUE K1'
BY SUBSTITUTING PARAMETER "a"
AND DIFFERENCE $I_{j+1}/I_j$ IN ERROR
EVALUATION FUNCTION    S152

↓

EVALUATION
VALUE K1' IS LESS THAN
THRESHOLD
VALUE?    S153

— NO → MODIFY PARAMETER "a"    S154

↓ YES

DETERMINE PARAMETER "a"    S155

↓

RETURN

# FIG.9

# FIG.10

# FIG.11

# FIG.12

(a)

(b)

# FIG.13

$M_j$

C3

$Q_i (r_i, \theta_i)$
$Q'_i (r_i, \theta'_i)$

O

$M_{j+1}$

# FIG.14

IMAGE PROCESSING APPARATUS — 20

CALCULATION UNIT — 200

CORRECTION IMAGE GENERATING UNIT — 151

MICROSCOPE APPARATUS — 10

IMAGE ACQUIRING UNIT — 104

STAGE POSITION CHANGING UNIT — 105

POSITION DETECTION UNIT — 105b

IMAGE INPUT UNIT — 120

STORAGE UNIT — 140

IMAGE PROCESSING PROGRAM — 141

CONTROL UNIT — 160

INPUT UNIT — 110

DISPLAY UNIT — 130

IMAGE ADJUSTING UNIT — 152

DIFFERENCE ACQUIRING UNIT — 153

SHADING DETECTION UNIT — 154

SHADING ESTIMATION UNIT — 155

IMAGE CORRECTION UNIT — 156

VS IMAGE GENERATING UNIT — 201

EP 2 796 916 B1

# FIG.15

```
                    ┌──────────────┐
                    │    START     │
                    └──────────────┘
                            │
                            ▼
        ┌─────────────────────────────────────┐
        │   CAPTURE A PLURALITY OF IMAGES      │──── S10
        └─────────────────────────────────────┘
                            │
                            ▼
        ┌─────────────────────────────────────┐
        │    INPUT A PLURALITY OF IMAGES       │──── S11
        └─────────────────────────────────────┘
                            │
                            ▼
        ┌─────────────────────────────────────┐
        │    PERFORM POSITION ADJUSTMENT       │──── S12
        │           AMONG IMAGES              │
        └─────────────────────────────────────┘
                            │
                            ▼
        ┌─────────────────────────────────────┐
        │    CONNECT PLURALITY OF IMAGES       │──── S20
        └─────────────────────────────────────┘
                            │
                            ▼
        ┌─────────────────────────────────────┐
        │      CALCULATE DIFFERENCE IN         │
        │  LUMINANCE OF CORRESPONDING          │──── S13
        │  PIXELS BETWEEN PLURALITY OF         │
        │            IMAGES                    │
        └─────────────────────────────────────┘
                            │
                            ▼
        ┌─────────────────────────────────────┐
        │        MODIFY SHADING MODEL          │──── S14
        └─────────────────────────────────────┘
                            │
                            ▼
        ┌─────────────────────────────────────┐
        │  EXPAND SHADING MODEL TO AREA        │
        │  OTHER THAN COMMON PORTION AND       │──── S15
        │  GENERATE CORRECTION IMAGE           │
        └─────────────────────────────────────┘
                            │
                            ▼
        ┌─────────────────────────────────────┐
        │        CORRECT EACH IMAGE            │──── S30
        └─────────────────────────────────────┘
                            │
                            ▼
        ┌─────────────────────────────────────┐
        │         OUTPUT VS IMAGE             │──── S31
        └─────────────────────────────────────┘
                            │
                            ▼
                    ┌──────────────┐
                    │     END      │
                    └──────────────┘
```

# FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009159093 A
- JP 2004272077 A
- JP 2008191427 A
- JP 2011141391 A
- JP 2001177738 A